# EUROPEAN PATENT SPECIFICATION

(11) **EP 4 345 503 B1**
(45) Date of publication and mention of the grant of the patent: **29.10.2025**
(21) Application number: 23200021.6
(22) Date of filing: 27.09.2023
(51) Int. Cl.: G01S 17/08, G01S 17/88

(54) **LASER RANGEFINDER WITH MAGNETIC SUCTION**
LASERENTFERNUNGSMESSER MIT MAGNETISCHER ANSAUGUNG
TÉLÉMÈTRE À LASER À ASPIRATION MAGNÉTIQUE

(30) Priority: 30.09.2022 CN 202222615052 U
(43) Date of publication of application: 03.04.2024
(73) Proprietor: Sndway Technology (Guangdong) Co., Ltd., Dongguan Guangdong (CN)
(72) Inventor: XU, Xiaojian, Humen Town Dongguan, Guangdong (CN); HE, Gang, Humen Town Dongguan, Guangdong (CN)
(74) Representative: Herrero & Asociados, S.L.

(56) References cited:
- CN-U- 216 718 682
- KR-A- 20170 060 286
- US-A1- 2020 200 530

## Description

### TECHNICAL FIELD

The disclosure relates to the technical field of measuring device, and particularly to a laser rangefinder with magnetic suction.

### BACKGROUND

A laser rangefinder is a high-precision measuring instrument, which processes an emitted laser beam and a laser beam reflected back by a targeted object to obtain a distance between the laser rangefinder and the targeted object.

At present, the laser rangefinder is a necessary tool for construction and decoration professionals, which is frequently used, especially on the high-altitude metal frame.

However, since the existing laser rangefinder cannot be fixed on the metal frame, it still needs to be held and fixed by a user, which causes problems such as inconvenient operation and easy falling Document US 2020/200530 describes a golf laser rangefinder comprising a housing and one or more magnets on a lateral side of the housing.

### SUMMARY

In view of the above shortcomings and deficiencies of the related art, the disclosure provides a laser rangefinder with magnetic suction, which solves the technical problems of the existing laser rangefinder, such as inconvenient operation and easy falling due to the need to hold the existing laser rangefinder. The invention is set out in the appended set of claims.

The benefits of the disclosure are as follows.

The laser rangefinder with magnetic suction is provided with the magnet device, so that the laser rangefinder can be attached to the metal frame through the magnet device, which makes the measurement more convenient. The laser rangefinder with magnetic suction avoids the problems of inaccurate measurement caused by shaking hands in the handheld process, which can also ensure the accuracy of the measurement results.

### BRIEF DESCRIPTION OF DRAWINGS

FIG. 1 illustrates a front view diagram of a laser rangefinder with magnetic suction according to an embodiment of the disclosure.
FIG. 2 illustrates a side view schematic diagram of a cross section of the laser rangefinder with magnetic suction according to the embodiment of the disclosure.
FIG. 3 illustrates an exploded view of the laser rangefinder with magnetic suction according to the embodiment of the disclosure.

### DETAILED DESCRIPTION OF EMBODIMENTS

To solve the problems of inconvenient operation and easy falling of the existing handheld laser device, the laser rangefinder proposed in an embodiment of the disclosure is added a magnet device inside or on an external surface of the traditional handheld laser rangefinder, so that the laser rangefinder can be attached to a metal frame through the magnet device, thus making the measurement more convenient. The laser rangefinder avoids the problem of inaccurate measurement caused by hand shaking during the existing handheld process, which can ensure the accuracy of measurement results.

In order to better understand the above technical solutions, illustrated embodiments of the disclosure will be described below in more detail with reference to the attached drawings. Although the illustrated embodiments of the disclosure are shown in the attached drawings, it should be understood that the disclosure can be implemented in various forms and should not be limited by the embodiments described herein. On the contrary, the embodiments are provided in order to understand the disclosure more clearly and thoroughly, and to fully convey the scope of the disclosure to those skilled in the art.

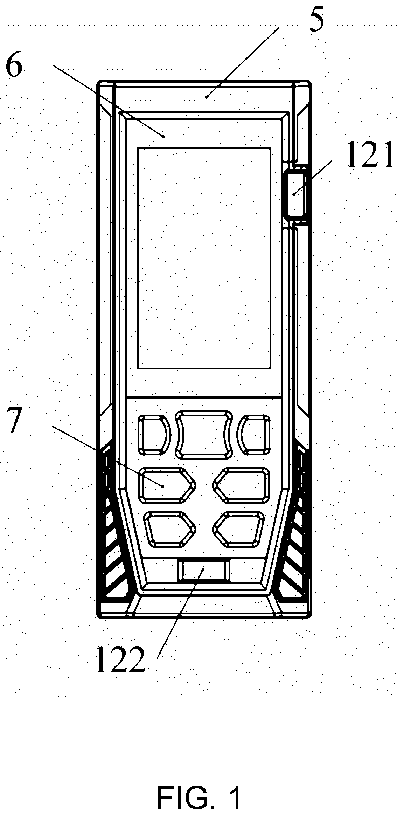

As shown in FIGS. 1-3, a laser rangefinder with magnetic suction includes a first shell 5, a second shell 1, a display screen 11, a control button 7, a laser ranging device 4 and a magnet device 3 configured to fix the laser rangefinder on a metal frame 10 by magnetic suction. The laser ranging device 4 is configured to emit a laser to a measured object surface to measure a numerical value, the display screen 11 is configured to display the numerical value measured by the laser ranging device 4, and the control button 7 is configured to control on-off and measurement of the laser ranging device 4.

It should be understood that the first shell 5 can also be referred to as an upper shell, and the second shell 1 can also be referred to as a bottom shell.

In an embodiment, the display screen 11 and the control button 7 are disposed at a front end of the first shell 5, and the control button 7 is disposed on a first side of the display screen 11 (e.g., as shown in FIG. 1, the control button 7 is disposed above the display screen 11). The first shell 5 and the second shell 1 is detachably connected, so that a first accommodating cavity can be formed between the first shell 5 and the second shell 1, and the laser ranging device 4 and the magnet device 3 are both disposed in the first accommodating cavity.

It should be understood that a specific layout of the laser ranging device 4 and the magnet device 3 in the first accommodating cavity can be disposed according to actual needs, and the embodiments of the disclosure are not limited to the situation.

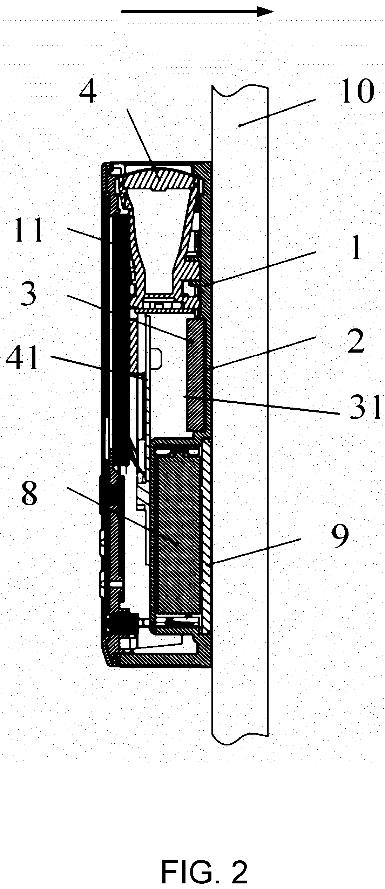

In an embodiment, as shown in FIGS. 2-3, a rear side of the display screen 11 (e.g., an arrow direction in FIG 2 represents a direction from a front side to the rear side) and the laser ranging device are fixedly connected. An outer surface of the second shell 1 is provided with a battery installation groove recessed along an internal direction of the second shell 1, a second accommodating cavity is formed among the battery installation groove, the laser ranging device 4, and the second shell 1 (i.e., a bottom wall of the second shell 1 and a side wall of the laser ranging device 4, and a side wall of the battery installation groove are enclosed to form the second accommodating cavity), and the magnet device 3 is disposed in the second accommodating cavity. The laser rangefinder further includes a battery 8 used to supply power to the laser ranging device 4 and the display screen 11 and a battery cover 9 adapted to the battery installation groove.

It should be understood that the specific number, size and setting form of the magnet device 3 can be set according to the actual needs, as long as it is ensured that the laser rangefinder can be fixed on the metal frame (e.g., an iron frame) by magnetic suction, and the embodiment of the disclosure is not limited to the situation.

In an embodiment, the magnet device 3 is fixed on an inner surface of the second shell by adhesion.

For example, as shown in FIG. 1, the magnet device 3 can be fixed on the bottom wall of the second shell 1 through a double-sided adhesive 2.

In an embodiment, the magnet device is fixed on an inner surface of the second shell by screw connection.

For example, the magnet device 3 can be fixed to the bottom wall of the second shell 1 by screws.

In an embodiment, as shown in FIG. 2, a gap is arranged between the laser ranging device 4 disposed in a rear side surface 41 of the second accommodating cavity and a front end surface of the magnet device 3, thereby avoiding the problem of the magnet device 3 not being firmly fixed due to the squeezing of the magnet device 3 caused by the laser ranging device 4.

In an embodiment, as shown in FIG. 1, the front end of the first shell 5 is provided with a horizontal device used to determine whether the laser rangefinder is in a horizontal state. The horizontal device can include a first level instrument 121. The control button 7 disposed at the first side of the display screen 11, and the first level instrument 121 disposed at a second side of the display screen 11

, and a direction of the first side the display screen 11 is perpendicular to a direction of the second side the display screen 11. The horizontal device can further include a second level instrument 122, which is disposed at a side of the control button, and the first level instrument 121 and the second level instrument 122 can be fixed inside the first shell 5.

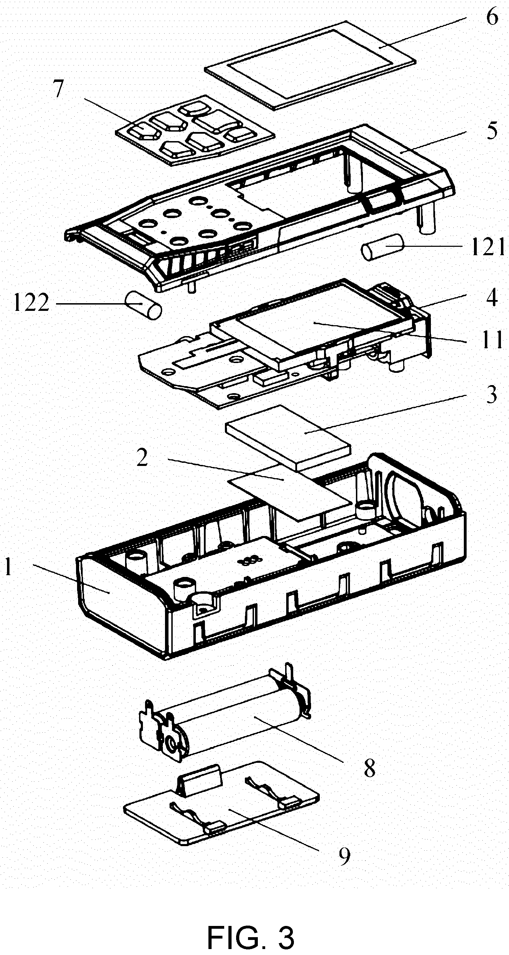

In an embodiment, as shown in FIGS. 1 and 3, the laser rangefinder can further include a display lens 6, which can be fixed outside the first shell 5.

It should be understood that the specific setting and relevant parameters of each device in the laser rangefinder can be set according to the actual needs, and the embodiment of the disclosure is not limited to the situation.

In a specific embodiment, the first shell 5 and the second shell 1 can both be made of polytetrafluoroethylene, which has advantages of falling resistance, high temperature resistance and corrosion resistance, so that the shells can effectively protect the internal parts of the laser rangefinder.

In a specific embodiment, the magnet device 3 can be a common magnet, which can achieve function of magnetic suction without the need for electrification or other ways.

In a specific embodiment, the display 11 can be a liquid crystal display (LCD) screen.

It should also be understood that although the laser rangefinder with magnetic suction is described above through FIGS. 1 to 3, those skilled in the art should understand that the laser rangefinder with magnetic suction can also be adjusted, and the embodiment of the disclosure is not limited to the situation.

In an embodiment, the magnet device 3 can also be disposed on the outer surface of the second shell 1.

In a specific embodiment, the magnetic device 3 can be disposed on an outer surface of the battery cover 9 of the second shell 1, and the magnet device 3 can be disposed on a side of the battery installation groove.

It should be understood that a size and a fixing method of the magnet device 3 can be set according to actual needs, and the embodiments of the disclosure are not limited to the situation.

In a specific embodiment, the magnet device 3 is fixed on the outer surface of the second shell 1 by adhesion.

In a specific embodiment, the magnet device 3 and the second shell 1 are integrally formed, the second shell 1 and the magnet device 3 can be placed together in a mold to form an integrated forming structure.

Therefore, the laser rangefinder proposed in the embodiment of the disclosure is added the magnet device inside or on the external surface of the traditional handheld laser rangefinder, so that the laser rangefinder can be attached to the metal frame through the magnet device, thus making the measurement more convenient. Moreover, it can also ensure the accuracy of the measurement results because it avoids the problem of inaccurate measurement caused by shaking hands in the existing handheld process.

It should be understood that the laser rangefinder is only illustrative, and those skilled in the art can make various deformations according to the above methods, and the contents after modification or deformation are also within the protection scope of the disclosure.

In the description of this disclosure, it should be understood that the terms "first" and "second" are only used for descriptive purposes and cannot be understood as indicating or implying relative importance or implying the number of indicated technical features. Therefore, features limited to "first" and "second" can explicitly or implicitly include one or more of these features. In the description of this disclosure, the meaning of "multiple" refers to two or more, unless otherwise specified.

In the disclosure, unless otherwise specified and limited, the terms "installation", "connected", "connection", "fixed" and other terms should be broadly understood, for example, they can be fixed connection, detachable connection, or integrated. It can be a mechanical connection or an electrical connection. It can be directly connected or indirectly connected through an intermediate medium. It can be the internal connection between two components or the interaction relationship between two components. For those skilled in the art, the specific meanings of the above terms in this disclosure can be understood based on specific circumstances.

In the disclosure, unless otherwise specified and limited, a first feature disposed "above" or "below" a second feature can be understood that the first feature is in direct contact with the second feature or the first feature is in indirect contact with the second feature through an intermediate medium. Moreover, the first feature disposed "on", "up", and "above" the second feature can be that the first feature is directly or obliquely above the second feature, or simply indicating a horizontal height of the first feature is higher than that of the second feature. The first feature deposed "under", "down", and "below" the second feature can be directly or obliquely below the first feature, or simply indicating that the horizontal height of the first feature is lower than that of the second feature.

In the description of the specification, the terms "an embodiment", "some embodiments", "embodiments", "examples", "specific examples", or "some examples" mean that the specific features, structures, materials, or characteristic described in conjunction with the embodiment or example are included in at least one embodiment or example of the disclosure. In this specification, the schematic expressions of the above terms do not necessarily refer to the same embodiments or examples. Moreover, the specific features, structures, materials, or characteristic described can be combined in an appropriate manner in any one or more embodiments or examples. In addition, the different embodiments or examples and the features of the different embodiments or examples described in this specification may be combined and incorporated by those skilled in the art without mutual contradiction.

### Reference number list

- 1: second shell
- 2: double-sided adhesive
- 3: magnet device
- 4: laser ranging device
- 5: first shell
- 6: display lens
- 7: control button
- 8: battery
- 9: battery cover
- 10: metal frame
- 11: display screen
- 121: first level instrument
- 122: second level instrument

## Claims

1. A laser rangefinder with magnetic suction, comprising:
a first shell (5), a second shell (1), a display screen (11), a control button (7), a laser ranging device (4) and a magnet device (3) configured to fix the laser rangefinder on a metal frame (10) by the magnetic suction;
wherein a front end of the first shell (5) is provided with the display screen (11) and the control button (7), a first accommodating cavity is formed between the first shell (5) and the second shell (1), the laser ranging device (4) is disposed in the first accommodating cavity, and the magnet device (3) is disposed on an inner surface of the second shell (1);
**characterized in that**,
an outer surface of the second shell (1) is recessed along an internal direction of the second shell (1) to define a battery installation groove; a second accommodating cavity is formed among the battery installation groove, the laser ranging device (4) and the second shell (1); the magnet device (3) is disposed in the second accommodating cavity; the laser rangefinder further comprises a battery (8) disposed in the battery installation groove; and the front end of the first shell (5) is provided with a leveling device.

2. The laser rangefinder with magnetic suction as claimed in claim 1, wherein a gap is arranged between the laser ranging device (4) disposed in a rear side surface of the second accommodating cavity and a front end surface of the magnet device (3).

3. The laser rangefinder with magnetic suction as claimed in claim 1, wherein the leveling device comprises a first level instrument (121) and a second level instrument (122), the control button (7) and the second level instrument (122) are disposed at a first side of the display screen (11), the first level instrument (121) is disposed at a second side of the display screen (11), and a direction of the first side is perpendicular to a direction of the second side.

## Patentansprüche

1. Laser-Entfernungsmesser mit magnetischer Haftung, umfassend:
ein erstes Gehäuse (5), ein zweites Gehäuse (1), einen Bildschirm (11), eine Bedientaste (7), eine Laser-Entfernungsmessvorrichtung (4) und eine Magnetvorrichtung (3), die dazu konfiguriert ist, den Laser-Entfernungsmesser durch magnetische Haftung an einem Metallrahmen (10) zu befestigen;
wobei an einem vorderen Ende des ersten Gehäuses (5) der Bildschirm (11) und die Bedientaste (7) angeordnet sind, zwischen dem ersten Gehäuse (5) und dem zweiten Gehäuse (1) ein erster Aufnahmeraum ausgebildet ist, die Laser-Entfernungsmessvorrichtung (4) in dem ersten Aufnahmeraum angeordnet ist und die Magnetvorrichtung (3) an einer Innenfläche des zweiten Gehäuses (1) angebracht ist;
**dadurch gekennzeichnet, dass**
eine Außenfläche des zweiten Gehäuses (1) entlang einer Innenrichtung des zweiten Gehäuses (1) vertieft ist, um eine Batterieinstallationsnut zu definieren; zwischen der Batterieinstallationsnut, der Laser-Entfernungsmessvorrichtung (4) und dem zweiten Gehäuse (1) ein zweiter Aufnahmeraum ausgebildet ist; die Magnetvorrichtung (3) in dem zweiten Aufnahmeraum angeordnet ist; der Laser-Entfernungsmesser ferner eine Batterie (8) umfasst, die in der Batterieinstallationsnut angeordnet ist; und das vordere Ende des ersten Gehäuses (5) mit einer Nivelliervorrichtung versehen ist.

2. Laser-Entfernungsmesser mit magnetischer Haftung nach Anspruch 1, wobei ein Spalt zwischen der an einer hinteren Seitenfläche des zweiten Aufnahmeraums angeordneten Laser-Entfernungsmessvorrichtung (4) und einer vorderen Endfläche der Magnetvorrichtung (3) vorgesehen ist.

3. Laser-Entfernungsmesser mit magnetischer Haftung nach Anspruch 1, wobei die Nivelliervorrichtung ein erstes Libelleninstrument (121) und ein zweites Libelleninstrument (122) umfasst, die Bedientaste (7) und das zweite Libelleninstrument (122) an einer ersten Seite des Bildschirms (11) angeordnet sind, das erste Libelleninstrument (121) an einer zweiten Seite des Bildschirms (11) angeordnet ist und eine Richtung der ersten Seite senkrecht zu einer Richtung der zweiten Seite verläuft.

## Revendications

1. Télémètre laser à aspiration magnétique, comprenant :
un premier boîtier (5), un deuxième boîtier (1), un écran d'affichage (11), un bouton de commande (7), un dispositif de télémétrie laser (4) et un dispositif magnétique (3) configuré pour fixer le télémètre laser sur un cadre métallique (10) par aspiration magnétique;
dans lequel une extrémité avant du premier boîtier (5) est pourvue de l'écran d'affichage (11) et du bouton de commande (7), une première cavité de logement est formée entre le premier boîtier (5) et le deuxième boîtier (1), le dispositif de télémétrie laser (4) est disposé dans la première cavité de logement, et le dispositif magnétique (3) est disposé sur une surface intérieure du deuxième boîtier (1);
**caractérisé en ce que**,
une surface extérieure du deuxième boîtier (1) est évidée selon une direction interne du deuxième boîtier (1) pour définir une rainure d'installation de batterie; une deuxième cavité de logement est formée entre la rainure d'installation de batterie, le dispositif de télémétrie laser (4) et le deuxième boîtier (1); le dispositif magnétique (3) est disposé dans la deuxième cavité de logement; le télémètre laser comprend en outre une batterie (8) disposée dans la rainure d'installation de batterie; et l'extrémité avant du premier boîtier (5) est pourvue d'un dispositif de nivellement.

2. Télémètre laser à aspiration magnétique selon la revendication 1, dans lequel un espace est aménagé entre le dispositif de télémétrie laser (4) disposé sur une surface latérale arrière de la deuxième cavité de logement et une surface d'extrémité avant du dispositif magnétique (3).

3. Télémètre laser à aspiration magnétique selon la revendication 1, dans lequel le dispositif de nivellement comprend un premier niveau à bulle (121) et un deuxième niveau à bulle (122), le bouton de commande (7) et le deuxième niveau à bulle (122) sont disposés sur un premier côté de l'écran d'affichage (11), le premier niveau à bulle (121) est disposé sur un deuxième côté de l'écran d'affichage (11), et une direction du premier côté est perpendiculaire à une direction du deuxième côté.
